# EUROPEAN PATENT APPLICATION

(11) **EP 4 807 338 A1**
(43) Date of publication of application: **16.09.2026**
(21) Application number: 26162882.0
(22) Date of filing: 06.03.2026
(51) Int. Cl.: G01M 11/00

(54) **OPTICAL FIBER CHARACTERISTIC MEASUREMENT DEVICE AND OPTICAL FIBER CHARACTERISTIC MEASUREMENT METHOD**

(30) Priority: 11.03.2025 JP 2025038209
(71) Applicant: Yokogawa Electric Corporation, Musashino-shi, Tokyo 180-8750 (JP); Toyota School Foundation, Nagoya-shi, Aichi-ken 468-8511 (JP)
(72) Inventor: Suzuki, Yuta, Musashino-shi, Tokyo, 180-8750 (JP); Watanabe, Fumie, Musashino-shi, Tokyo, 180-8750 (JP); Honma, Masayoshi, Musashino-shi, Tokyo, 180-8750 (JP); Tezuka, Shin-ichirou, Musashino-shi, Tokyo, 180-8750 (JP); Hotate, Kazuo, Nagoya-shi, Aichi, 468-8511 (JP)
(74) Representative: Grünecker Patent- und Rechtsanwälte PartG mbB

(57) **Abstract**

An optical fiber characteristic measurement device includes a light detection unit, a superimposing unit, and a processing unit. The light detection unit is configured to detect Brillouin scattered light obtained by injecting light into an optical fiber under test and configured to output a detection signal. The superimposing unit is configured to superimpose a measurement signal modulated at a predetermined frequency and swept over a predetermined frequency range on light that enters the optical fiber under test, light used to detect the Brillouin scattered light, or the detection signal. The processing unit is configured to obtain a spectrum indicating an intensity or amplitude distribution of a frequency component that is n times (n is an integer of 1 or more) the predetermined frequency contained in the detection signal.

## Description

### BACKGROUND

### Technical Fields

The present disclosure relates to an optical fiber characteristic measurement device and an optical fiber characteristic measurement method. Priority is claimed on Japanese Patent Application No. 2025-038209, filed on March 11, 2025, the contents of which are incorporated herein by reference.

### Description of Related Art

A spectrum (frequency) of Brillouin scattered light generated when light enters an optical fiber is changed according to a change in temperature or strain of the optical fiber. An optical fiber characteristic measurement device utilizing such a property measures a temperature distribution or strain distribution in a length direction of the optical fiber by detecting a change in frequency of the Brillouin scattered light (Brillouin frequency shift: BFS) throughout in the length direction of the optical fiber.

As typical examples of such an optical fiber characteristic measurement device, those based on a Brillouin optical correlation domain reflectometry (BOCDR) method and those based on a Brillouin optical correlation domain analysis (BOCDA) method are known. Japanese Patent No. 6773091 discloses an optical fiber characteristic measurement device based on the BOCDR method capable of reducing a time required for measurement.

### SUMMARY

Incidentally, in an optical fiber characteristic measurement device, in order to reduce noise superimposed on a spectrum of Brillouin scattered light (Brillouin gain spectrum: BGS), processing of obtaining the Brillouin gain spectrum a plurality of times and averaging them is performed. When the Brillouin frequency shift is determined from the Brillouin gain spectrum that has been subjected to such processing, an accuracy of the Brillouin frequency shift is improved.

Several methods for determining the Brillouin frequency shift from the Brillouin gain spectrum have been proposed to date. For example, there have been proposed a method in which a frequency at which an intensity of the Brillouin gain spectrum is maximum (a peak frequency) is defined as the Brillouin frequency shift, and a method in which the Brillouin gain spectrum is fitted with a quadratic function and a frequency at the vertex of the quadratic function is defined as the Brillouin frequency shift.

In order to further improve a measurement accuracy of the Brillouin frequency shift determined by such methods, it is conceivable to increase the number of times the Brillouin gain spectrum is averaged. However, even if the number of times the Brillouin gain spectrum is averaged is increased, there has been a limit to the improvement in the measurement accuracy of the Brillouin frequency shift.

The present disclosure has been made in view of the above circumstances, and an objective thereof is to provide an optical fiber characteristic measurement device and an optical fiber characteristic measurement method capable of improving a measurement accuracy of Brillouin frequency shift compared to conventional methods.

In order to solve the above-described problems, an optical fiber characteristic measurement device (1 to 3) according to a first aspect of the present disclosure includes a light detection unit (18, 47) detecting Brillouin scattered light (LS) obtained by injecting light into an optical fiber under test (FUT) and outputting a detection signal, a superimposing unit (20, 30, 42) superimposing a measurement signal (MS) modulated at a predetermined frequency and swept over a predetermined frequency range on light (Pr, Pp) that enters the optical fiber under test, light (LR) used to detect the Brillouin scattered light, or the detection signal (S1), and a processing unit (23) obtaining a spectrum indicating an intensity or amplitude distribution of a frequency component that is n times (n is an integer of 1 or more) the predetermined frequency contained in the detection signal.

Also, according to a second aspect of the present disclosure, the optical fiber characteristic measurement device according to the first aspect may be configured such that the processing unit measures a characteristic of the optical fiber under test on the basis of the spectrum.

Also, according to a third aspect of the present disclosure, the optical fiber characteristic measurement device according to the second aspect may be configured such that the processing unit measures a characteristic of the optical fiber under test by obtaining a spectrum indicating an intensity or amplitude distribution of a frequency component that is the same as the predetermined frequency contained in the detection signal and determining either a frequency at which the spectrum reaches a minimum or a frequency at which a sign of the spectrum changes.

Also, according to a fourth aspect of the present disclosure, the optical fiber characteristic measurement device according to the second aspect may be configured such that the processing unit measures a characteristic of the optical fiber under test by obtaining a spectrum indicating an intensity distribution of a frequency component that is twice the predetermined frequency contained in the detection signal and determining a peak frequency of the spectrum.

Also, according to a fifth aspect of the present disclosure, the optical fiber characteristic measurement device according to any one of the first to fourth aspects may include a filter unit (21) extracting a frequency component that is n times the predetermined frequency from the detection signal.

Also, according to a sixth aspect of the present disclosure, the optical fiber characteristic measurement device according to any one of the first to fifth aspects may include a first light branching unit (12) branching frequency-modulated modulated light (L1) into pump light (LP) and reference light (LR), and a second light branching unit (16) injecting the pump light from one end of the optical fiber under test and outputting the Brillouin scattered light generated within the optical fiber under test, in which the light detection unit may detect interference light between the Brillouin scattered light and the reference light.

Also, according to a seventh aspect of the present disclosure, the optical fiber characteristic measurement device according to the sixth aspect may be configured such that the superimposing unit (20) superimposes the measurement signal on the detection signal.

Also, according to an eighth aspect of the present disclosure, the optical fiber characteristic measurement device according to the sixth or seventh aspect may include a shifting unit (30) shifting a frequency of the reference light, in which the superimposing unit (30) may superimpose the measurement signal on the frequency-shifted reference light.

Also, according to a ninth aspect of the present disclosure, the optical fiber characteristic measurement device according to any one of the first to fifth aspects may include a third light branching unit (41) branching a frequency-modulated modulated light (L1) into a first branched light (Pp) and a second branched light (Pr), a shifting unit (42) shifting a frequency of the first branched light or the second branched light, a pulse forming unit (44) switching whether or not to output the first branched light as pump light, and a fourth light branching unit (46) injecting the pump light output from the pulse forming unit from one end of the optical fiber under test, and outputting probe light, which is the second branched light injected from the other end of the optical fiber under test and passed through the optical fiber under test, and the Brillouin scattered light generated within the optical fiber under test, in which the light detection unit may detect the Brillouin scattered light output from the fourth light branching unit.

Also, according to a tenth aspect of the present disclosure, the optical fiber characteristic measurement device according to the ninth aspect may be configured such that the superimposing unit (42) superimposes the measurement signal on the first branched light or the second branched light.

Also, according to an eleventh aspect of the present disclosure, the optical fiber characteristic measurement device according to any one of the first to tenth aspects may be configured such that the predetermined frequency range is a frequency range corresponding to a spectral width of a Brillouin gain spectrum (SP0) which is a spectrum of the Brillouin scattered light.

An optical fiber characteristic measurement method according to one aspect of the present disclosure includes a step (S14) of obtaining a detection signal by detecting Brillouin scattered light (LS) obtained by injecting light into an optical fiber under test (FUT), a step (S15) of superimposing a measurement signal (MS) modulated at a predetermined frequency and swept over a predetermined frequency range on light (Pr, Pp) that enters the optical fiber under test, light (LR) used to detect the Brillouin scattered light, or the detection signal (S1), and a step (S16, S17) of obtaining a spectrum indicating an intensity or amplitude distribution of a frequency component that is n times (n is an integer of 1 or more) the predetermined frequency contained in the detection signal.

According to the present disclosure, it is possible to obtain an effect of improving a measurement accuracy of the Brillouin frequency shift compared to conventional cases.

Further features and aspects of the present disclosure will become apparent from the following detailed description of exemplary embodiments with reference to the attached drawings.

### BRIEF DESCRIPTION OF THE DRAWINGS

FIG. 1 is a block diagram showing a configuration of a main part of an optical fiber characteristic measurement device according to a first embodiment of the present disclosure.
FIG. 2A and FIG. 2B are diagrams for explaining a dither spectrum obtained in the first embodiment of the present disclosure.
FIG. 3 is a flowchart showing an operation example of the optical fiber characteristic measurement device according to the first embodiment of the present disclosure.
FIG. 4A and FIG. 4B are diagrams for explaining another example of the dither spectrum obtained in the first embodiment of the present disclosure.
FIG. 5A to FIG. 5C are diagrams showing a simulation result of the optical fiber characteristic measurement device according to the first embodiment of the present disclosure.
FIG. 6 is a block diagram showing a configuration of a main part of an optical fiber characteristic measurement device according to a second embodiment of the present disclosure.
FIG. 7 is a block diagram showing a configuration of a main part of an optical fiber characteristic measurement device according to a third embodiment of the present disclosure.

### DETAILED DESCRIPTION OF THE INVENTION

Hereinafter, an optical fiber characteristic measurement device and an optical fiber characteristic measurement method according to embodiments of the present disclosure will be described in detail with reference to the drawings.

### [First embodiment]

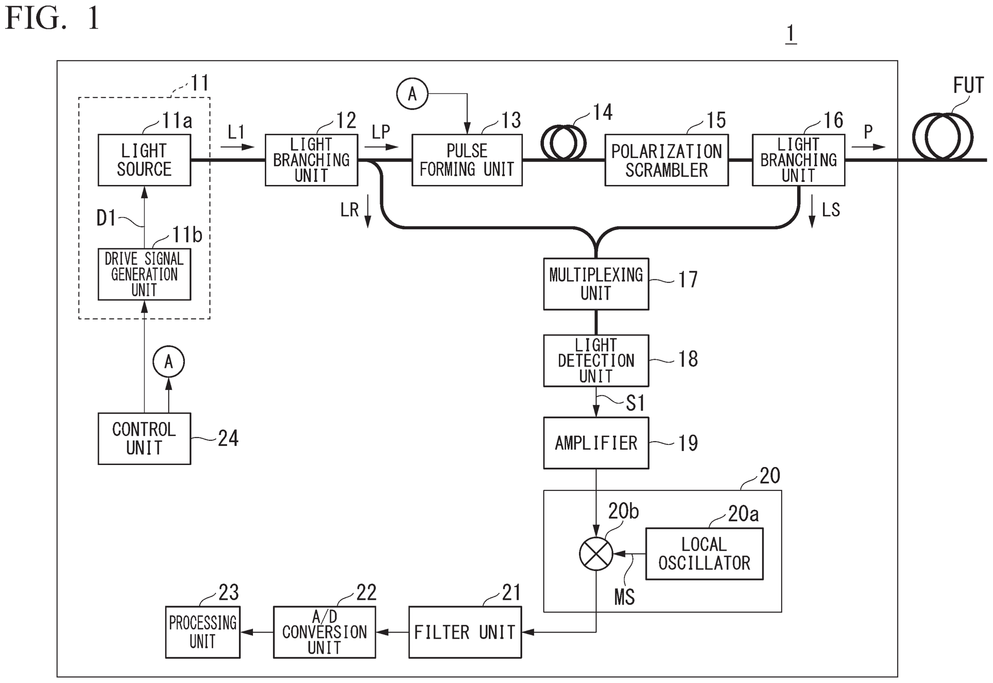

FIG. 1 is a block diagram showing a configuration of a main part of an optical fiber characteristic measurement device according to a first embodiment of the present disclosure. As shown in FIG. 1, an optical fiber characteristic measurement device 1 of the present embodiment includes a light source unit 11, a light branching unit 12 (first light branching unit), a pulse forming unit 13, a light delay unit 14, a polarization scrambler 15, a light branching unit 16 (second light branching unit), a multiplexing unit 17, a light detection unit 18, an amplifier 19, a measurement signal superimposing unit 20 (superimposing unit), a filter unit 21, an A/D conversion unit 22, a processing unit 23, and a control unit 24.

The optical fiber characteristic measurement device 1 of the present embodiment is an optical fiber characteristic measurement device based on a so-called BOCDR method, in which characteristics of an optical fiber under test FUT are measured on the basis of Brillouin scattered light LS obtained by injecting pump pulse light P into the optical fiber under test FUT. Further, the above-described pump pulse light P is obtained by pulse-modulating pump light LP, which is continuous light that has been frequency-modulated. Also, the above-described Brillouin scattered light LS is backscattered light generated by Brillouin scattering within the optical fiber under test FUT.

As for the optical fiber under test FUT, any arbitrary one can be used depending on a wavelength of the pump pulse light P, or the like.

The light source unit 11 includes a light source 11a and a drive signal generation unit 11b, and outputs frequency-modulated continuous light L1 (modulated light) under the control of the control unit 24. The light source 11a includes a semiconductor laser element such as, for example, a distributed feedback laser diode (DFB-LD), and outputs the frequency-modulated continuous light L1 in accordance with a drive signal D1 output from the drive signal generation unit 11b.

The drive signal generation unit 11b generates, under the control of the control unit 24, the drive signal D1 for causing the light source 11a to output the frequency-modulated continuous light L1. Specifically, the drive signal generation unit 11b generates the drive signal D1 by adding a direct current (DC) bias current and a sinusoidal alternating current (AC). The drive signal D1 is a sinusoidal signal, and a frequency (modulation frequency fm) thereof is determined by the control of the control unit 24.

The light branching unit 12 branches the continuous light L1 output from the light source unit 11 into the pump light LP and reference light LR at a predefined intensity ratio (for example, 1:1). The pulse forming unit 13 pulse-modulates the pump light LP branched by the light branching unit 12 under the control of the control unit 24. The reason for providing such a pulse forming unit 13 is to obtain the pump pulse light P used in a time gate method.

The light delay unit 14 delays the pump light LP (pump pulse light P) pulse-modulated by the pulse forming unit 13 by a predetermined amount of time. The light delay unit 14 includes, for example, an optical fiber of a predetermined length. The delay time can be adjusted by changing a length of the optical fiber. The reason for providing such a light delay unit 14 is to dispose a zero-order correlation peak, whose position does not move even when the modulation frequency fm is swept, outside the optical fiber under test FUT.

The polarization scrambler 15 randomly changes a polarization state of the pump pulse light P, that has passed through the light delay unit 14, over time. The reason for doing so is to suppress fluctuations in Brillouin gain spectrum that depend on a relative polarization state between the Brillouin scattered light LS, obtained by injecting the pump pulse light P into the optical fiber under test FUT, and the reference light LR.

The light branching unit 16 includes a first port, a second port, and a third port. The first port is connected to the polarization scrambler 15. The second port is connected to the optical fiber under test FUT. The third port is connected to the multiplexing unit 17. The light branching unit 16 outputs the pump pulse light P input from the first port to the second port. Also, the light branching unit 16 outputs the Brillouin scattered light LS from the optical fiber under test FUT, which is input from the second port, to the third port. As such a light branching unit 16, for example, an optical circulator can be used.

The multiplexing unit 17 combines the Brillouin scattered light LS output from the third port of the light branching unit 16 with the reference light LR branched by the light branching unit 12. Also, the multiplexing unit 17 branches the combined light into two lights at a predefined intensity ratio (for example, 1:1) and outputs them to the light detection unit 18. Each of the two lights branched by the multiplexing unit 17 contains, for example, 50% of the backscattered light from the optical fiber under test FUT and 50% of the reference light. As such a multiplexing unit 17, for example, an optical coupler can be used.

The light detection unit 18 performs optical heterodyne detection by causing interference between the Brillouin scattered light LS and the reference light LR contained in the two lights output from the multiplexing unit 17. The light detection unit 18 includes, for example, a balanced photodiode formed of two photodiodes (PDs) and a multiplexer (both not shown). The photodiodes receive the two lights output from the multiplexing unit 17, respectively. The light reception signals from the photodiodes are input to the multiplexer. From the multiplexer, a detection signal S1, which is an interference signal (beat signal) indicating a frequency difference between the Brillouin scattered light LS and the reference light LR, is output.

The amplifier 19 amplifies the detection signal S1 output from the light detection unit 18 at a predetermined amplification factor. The detection signal S1 output from the light detection unit 18 is a signal that includes frequency components on the order of tens of gigahertz. Therefore, an RF (radio frequency) amplifier can be used as the amplifier 19.

The measurement signal superimposing unit 20 superimposes a measurement signal MS for obtaining a spectrum corresponding to the Brillouin gain spectrum on the detection signal S1 (detection signal output from the light detection unit) amplified by the amplifier 19. The measurement signal MS is a signal that is modulated at a predetermined frequency and swept over a predetermined frequency range. As the predetermined frequency, for example, any frequency that can be extracted by the filter unit 21 (that can pass through the filter unit 21) can be used.

Also, the predetermined frequency range is, for example, a frequency range according to a spectral width of the Brillouin gain spectrum which is a spectrum of the Brillouin scattered light. The predetermined frequency range is set to, for example, a frequency range approximately equal to the spectral width of the Brillouin gain spectrum. Further, the predetermined frequency range may be set to a frequency range larger than the spectral width of the Brillouin gain spectrum, or may be set to a frequency range smaller than the spectral width of the Brillouin gain spectrum.

The measurement signal superimposing unit 20 includes a local oscillator 20a and a mixer 20b. The local oscillator 20a generates and outputs the measurement signal MS described above. The mixer 20b superimposes the measurement signal MS output from the local oscillator 20a on the detection signal S1 amplified by the amplifier 19. Further, when the measurement signal MS is superimposed on the detection signal S1, it can also be said that the detection signal S1 is modulated by the measurement signal MS.

Here, let a center frequency of the measurement signal MS be f₀, a predetermined frequency be f₁, a modulation amplitude be Δf, a time be t, and the measurement signal MS be represented as fᵢₙ(t). The measurement signal fᵢₙ(t) is expressed by the following expression (1). ${f}_{in} \left(t\right) = {f}_{0} + Δf ⋅ sin \left(2{πf}_{1}t\right)$

That is, the measurement signal fᵢₙ(t) can be said to be a signal (dither signal) in which frequency modulation at the frequency f₁ is applied to a center of the frequency f₀. Further, when a minimum frequency in the predetermined frequency range is fₘᵢₙ and a maximum frequency is fₘₐₓ, the center frequency f₀ of the measurement signal MS is swept, for example, within a range of fₘᵢₙ ≤ f₀ ≤ fₘₐₓ.

The filter unit 21 passes (extracts) at least a component having the same frequency as the above-described predetermined frequency f₁ from the signal output from the measurement signal superimposing unit 20. As the filter unit 21, for example, a low-pass filter or a band-pass filter can be used. When a low-pass filter is used as the filter unit 21, a cutoff frequency f_{c} of the low-pass filter needs to be greater than the above-described predetermined frequency f₁. That is, it is necessary to satisfy a relationship f_{c} > f₁.

The A/D conversion unit 22 converts a component that has passed through the filter unit 21 (extracted component) into a digital signal. As described above, the filter unit 21 of the present embodiment passes (extracts) a component having the same frequency as the predetermined frequency f₁. Therefore, the A/D conversion unit 22 converts a component having the same frequency as the predetermined frequency f₁ into a digital signal.

The processing unit 23 obtains a spectrum corresponding to the Brillouin gain spectrum on the basis of the component converted into a digital signal by the A/D conversion unit 22. Here, the conventional Brillouin gain spectrum is a spectrum obtained when the measurement signal MS superimposed by the measurement signal superimposing unit 20 is a signal without frequency modulation at the frequency f₁ (that is, a measurement signal expressed as fᵢₙ(t) = f₀). In contrast, the spectrum corresponding to the Brillouin gain spectrum according to the present embodiment is a spectrum obtained when the measurement signal MS superimposed by the measurement signal superimposing unit 20 is a signal (dither signal) expressed by the above-described expression (1). Therefore, hereinafter, the spectrum corresponding to the Brillouin gain spectrum according to the present embodiment is referred to as a "dither spectrum".

As described above, in the present embodiment, instead of the Brillouin gain spectrum itself, a dither spectrum, which is the Brillouin gain spectrum obtained by using the dither signal, is determined. The reason for obtaining such a dither spectrum is to improve a measurement accuracy of a Brillouin frequency shift compared to conventional methods.

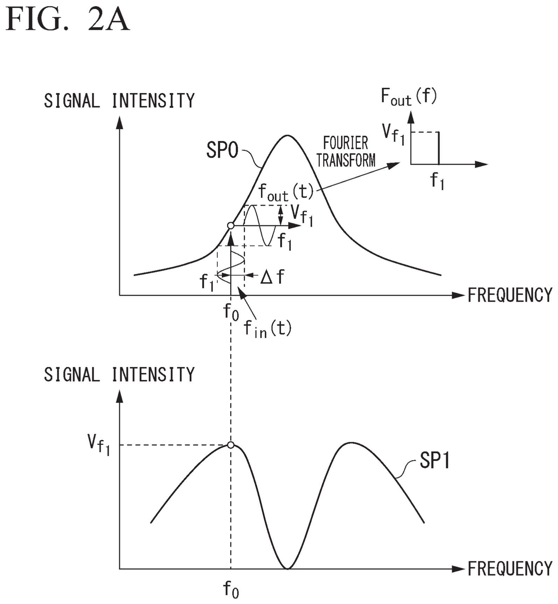

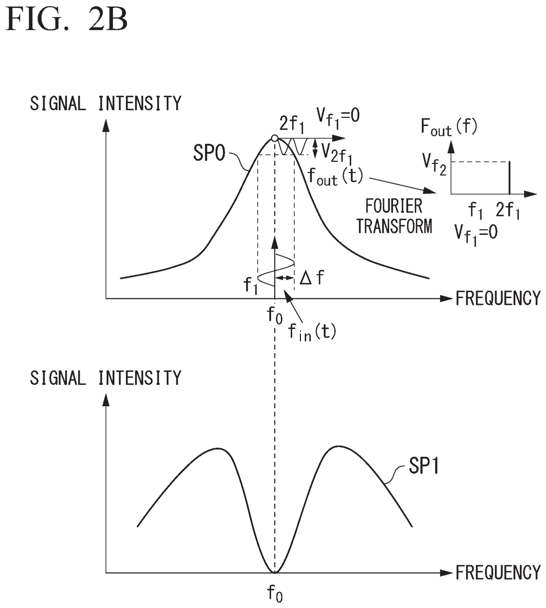

FIG. 2 is a diagram for explaining the dither spectrum obtained in the first embodiment of the present disclosure. FIG. 2A is an explanatory diagram of a case in which the center frequency f₀ of the measurement signal MS is shifted from a peak frequency of the Brillouin gain spectrum. In contrast, FIG. 2B is an explanatory diagram of a case in which the center frequency f₀ of the measurement signal MS matches the peak frequency of the Brillouin gain spectrum. In FIG. 2, the spectrum denoted by reference sign SP0 is the Brillouin gain spectrum, and the spectrum denoted by reference sign SP1 is the dither spectrum.

As shown in FIGS. 2A and 2B, when the measurement signal fᵢₙ(t) expressed by the above-described expression (1) is superimposed on the detection signal S1, a signal represented by fₒᵤₜ(t) is obtained. Further, Fₒᵤₜ(f) shown in FIGS. 2A and 2B is obtained by Fourier transforming the signal represented by fₒᵤₜ(t).

As shown in FIG. 2A, when the center frequency f₀ of the measurement signal MS is shifted from the peak frequency of the Brillouin gain spectrum, a signal having a signal amplitude of Vf₁ and mainly composed of a frequency component equal to the predetermined frequency f₁ is obtained as fₒᵤₜ(t). In contrast, as shown in FIG. 2B, when the center frequency f₀ of the measurement signal MS matches the peak frequency of the Brillouin gain spectrum, fₒᵤₜ(t) having a signal amplitude of V2f₁ and mainly composed of a frequency component that is twice the predetermined frequency f₁ is obtained. Further, in FIG. 2B, a frequency component equal to the predetermined frequency f₁ is not obtained.

Here, examples of a method for calculating the frequency f₁ component of fₒᵤₜ(t) include a method using a fast Fourier transform (FFT) and a method based on lock-in calculation. There are two types of lock-in calculation including one-phase lock-in calculation and two-phase lock-in calculation, and for example, when the two-phase lock-in calculation is performed, an intensity of the frequency f₁ component of fₒᵤₜ(t) is obtained, and an output thereof closely approximates the square of a slope of the Brillouin gain spectrum SP0.

When this is illustrated, as shown in FIGS. 2A and 2B, a dither spectrum SP1, in which a signal intensity is high at a portion in which the slope of the Brillouin gain spectrum SP0 is large and the signal intensity is low at a portion in which the slope is small, is obtained. Since a slope of a portion in which the peak frequency of the Brillouin gain spectrum is obtained is 0, the signal intensity of the dither spectrum SP1 becomes minimum. Also, the Brillouin gain spectrum SP0 has a single-peaked (unimodal) shape, whereas the dither spectrum SP1 has a double-peaked shape (bimodal). Therefore, if a frequency at which the dither spectrum SP1 shown in FIG. 2 reaches a minimum can be determined, it is possible to determine a frequency corresponding to the peak frequency of the Brillouin gain spectrum SP0 shown in FIG. 2.

The processing unit 23 measures a characteristic of the optical fiber under test FUT on the basis of the obtained dither spectrum. For example, the processing unit 23 determines the frequency at which the dither spectrum SP1 shown in FIG. 2 reaches a minimum as the Brillouin frequency shift, and converts an amount of the Brillouin frequency shift into a magnitude of strain or temperature change applied to the optical fiber under test FUT.

The processing unit 23 captures the components converted into digital signals by the A/D conversion unit 22 during a period defined by the time gate method. As a result, even if a plurality of correlation peaks exist in the optical fiber under test FUT, the characteristic of the optical fiber under test FUT can be measured without any problem. Further, the processing unit 23 may obtain the above-described spectrum by performing a fast Fourier transform (FFT).

Further, the optical fiber characteristic measurement device 1 may include a display unit that displays a characteristic of the optical fiber under test FUT (such as, for example, strain distribution) measured by the processing unit 23. The display unit is, for example, a liquid crystal display, an organic EL (Electro Luminescence) display device, or the like.

The control unit 24 comprehensively controls an operation of the optical fiber characteristic measurement device 1. For example, the control unit 24 controls the drive signal generation unit 11b provided in the light source unit 11 to generate the drive signal D1 for outputting the frequency-modulated continuous light L1 from the light source 11a. Also, the control unit 24 controls the pulse forming unit 13 to generate the pump pulse light P from the pump light LP.

Further, the processing unit 23 and the control unit 24 are realized by a hardware processor such as a central processing unit (CPU) executing a program (software) stored in a storage unit (not shown). Also, some or all of these functional units may be realized by hardware (circuit unit including circuitry) such as a large scale integration (LSI), an application specific integrated circuit (ASIC), a field-programmable gate array (FPGA), and a graphics processing unit (GPU), or may be realized by software and hardware in cooperation.

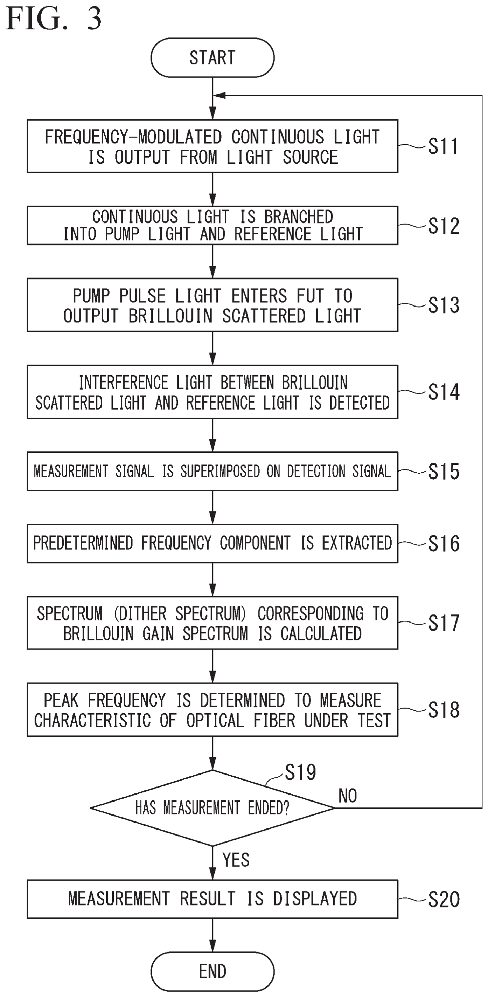

FIG. 3 is a flowchart showing an operation example of the optical fiber characteristic measurement device according to the first embodiment of the present disclosure. The flow chart shown in FIG. 3 shows an operation when measuring a characteristic of the optical fiber under test FUT in a length direction. Further, the flow chart shown in FIG. 3 is started, for example, when an instruction to start measurement is given to the optical fiber characteristic measurement device 1.

When processing of the flowchart shown in FIG. 3 is started, first, a control signal is output from the control unit 24 to the drive signal generation unit 11b. Then, the drive signal D1 is output from the drive signal generation unit 11b to the light source 11a, and the continuous light L1 that has been frequency modulated at the modulation frequency fm is output from the light source 11a (step S11).

The continuous light L1 output from the light source 11a enters the light branching unit 12 and is branched into the pump light LP and the reference light LR (step S12). The branched pump light LP enters the pulse forming unit 13 and is pulse-modulated. As a result, the pump pulse light P is output from the pulse forming unit 13. The pump pulse light P passes through the light delay unit 14, the polarization scrambler 15, and the light branching unit 16 in that order, and then enters the optical fiber under test FUT.

The pump pulse light P enters the optical fiber under test FUT propagates through the optical fiber under test FUT, and accordingly, the Brillouin scattered light LS (backscattered light) is sequentially generated within the optical fiber under test FUT. The Brillouin scattered light LS generated within the optical fiber under test FUT propagates in a direction opposite to a direction in which the pump light LP propagates, and is output from one end of the optical fiber under test FUT (step S13).

The Brillouin scattered light LS output from one end of the optical fiber under test FUT enters the multiplexing unit 17 via the light branching unit 16, is combined with the reference light LR branched by the light branching unit 12, and then enters the light detection unit 18. Then, optical heterodyne detection is performed in the light detection unit 18, and the detection signal S1, which is an interference signal (beat signal) representing a frequency difference between the Brillouin scattered light LS and the reference light LR, is output from the light detection unit 18 (step S14).

The detection signal S1 output from the light detection unit 18 is amplified by the amplifier 19 and then input to the measurement signal superimposing unit 20. Then, in the measurement signal superimposing unit 20, the measurement signal MS expressed by the above-described expression (1) is superimposed on the amplified detection signal S1 (step S15). The detection signal S1 on which the measurement signal MS has been superimposed is input to the filter unit 21, in which at least a component having the same frequency as the predetermined frequency f₁ is extracted (step S16).

The component extracted by the filter unit 21 is converted into a digital signal by the A/D conversion unit 22 and input to the processing unit 23. Then, in the processing unit 23, processing for obtaining the dither spectrum is performed on the basis of the component converted into the digital signal (step S17). In this processing, as described with reference to FIG. 2, for example, the two-phase lock-in calculation is performed to obtain a signal intensity of the component having the same frequency as the predetermined frequency f₁.

When the dither spectrum is obtained, the processing unit 23 performs processing of determining a frequency corresponding to the peak frequency of the Brillouin gain spectrum. For example, as described with reference to FIG. 2, processing of determining a frequency at which the dither spectrum SP1 reaches a minimum is performed. As described above, in the present embodiment, the dither spectrum is obtained, rather than the Brillouin gain spectrum itself. Therefore, in the present embodiment, it is configured such that a frequency corresponding to the peak frequency of the Brillouin gain spectrum is determined from the dither spectrum.

When the frequency corresponding to the peak frequency of the Brillouin gain spectrum is determined, the processing unit 23 performs processing of obtaining an amount of Brillouin frequency shift from the frequency corresponding to the peak frequency. Then, the processing unit 23 performs processing of converting the obtained amount of Brillouin frequency shift into a magnitude of strain, temperature change, or the like applied to the optical fiber under test FUT, thereby measuring the characteristic of the optical fiber under test FUT (step S18).

When the above-described processing ends, the control unit 24 determines whether the measurement has ended (step S19). For example, it is determined whether the measurement has ended for all measurement points in the length direction of the optical fiber under test (FUT). If the control unit 24 determines that the measurement has not ended (if the determination result in step S19 is "NO"), the processing returns to step S11, a position of the measurement point is changed to reset the modulation frequency fm of the light source 11a, and then the processing of steps S11 to S18 is performed.

In contrast, if the control unit 24 determines that the measurement has ended (if the determination result in step S19 is "YES"), for example, processing of displaying the measurement result is performed in the processing unit 23 (step S20). For example, processing is performed to display a graph (a graph showing strain distribution) in which a horizontal axis represents a position in the length direction of the optical fiber under test FUT and a vertical axis represents a magnitude of strain applied to the optical fiber under test FUT. With the above-described processing, a series of processing steps shown in FIG. 3 ends.

Further, in the embodiment described above, the filter unit 21 extracts a component having the same frequency as the predetermined frequency f₁ from the detection signal S1 on which the measurement signal MS has been superimposed. However, the filter unit 21 may also be configured to extract a component having a frequency that is n times (n is an integer of 2 or more) the predetermined frequency f₁ from the detection signal S1 on which the measurement signal MS has been superimposed. When the filter unit 21 extracts a component having a frequency that is n times the predetermined frequency f₁, the processing unit 23 obtains a signal intensity of the component having a frequency that is n times the predetermined frequency f₁.

Also, in the embodiment described above, the processing unit 23 obtained the signal intensity by performing the two-phase lock-in calculation. However, the processing unit 23 may also be configured to obtain the signal amplitude by performing the one-phase lock-in calculation.

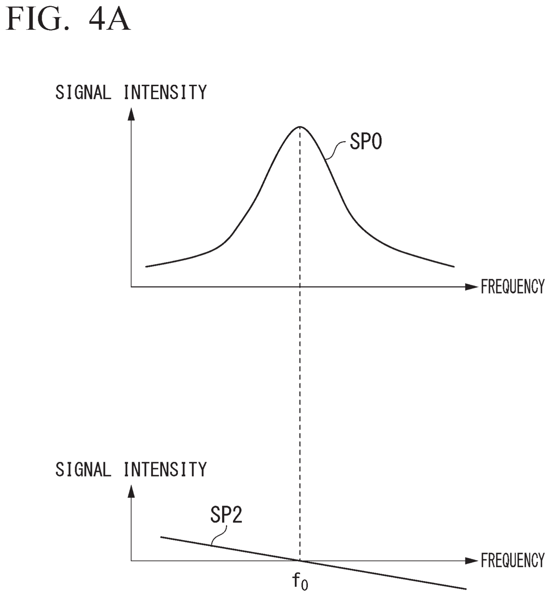

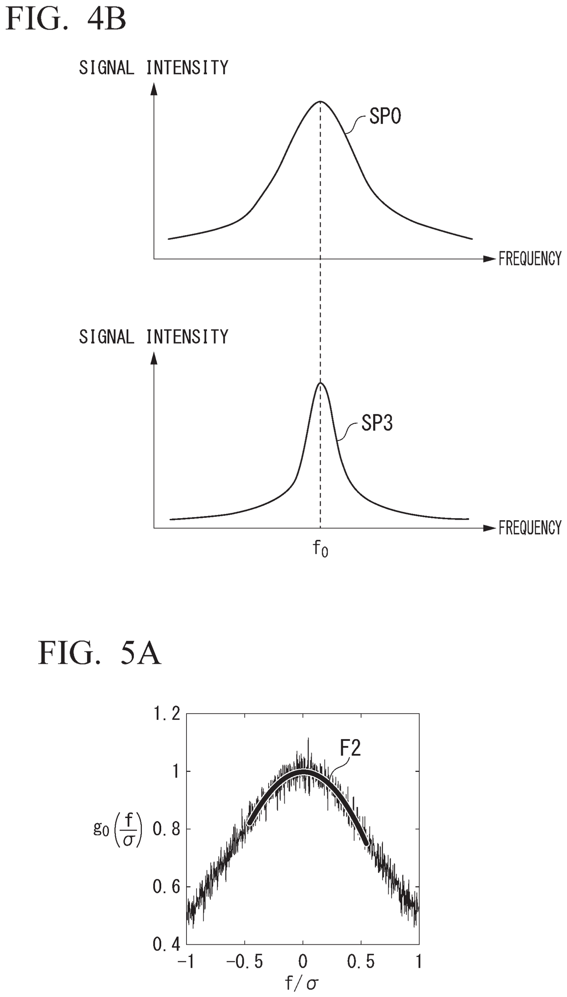

FIG. 4 is a diagram for explaining another example of the dither spectrum obtained in the first embodiment of the present disclosure. Further, in FIG. 4, the Brillouin gain spectrum SP0 similar to that shown in FIG. 2 is illustrated.

A dither spectrum SP2 shown in FIG. 4A is obtained when the processing unit 23 performs the one-phase lock-in calculation on the component having the same frequency as the predetermined frequency f₁ extracted by the filter unit 21. Since the one-phase lock-in calculation is a calculation including positive and negative signs, the dither spectrum SP2 becomes a linear spectrum whose sign changes at the peak frequency of the Brillouin gain spectrum SP0. Therefore, when a zero-crossing point of the dither spectrum SP2 can be obtained, it is possible to determine the frequency corresponding to the peak frequency of the Brillouin gain spectrum SP0.

The dither spectrum SP3 shown in FIG. 4B is obtained when the processing unit 23 performs the two-phase lock-in calculation on a component having a frequency that is twice the predetermined frequency f₁ extracted by the filter unit 21. As described with reference to FIG. 2, when the center frequency f₀ of the measurement signal MS matches the peak frequency of the Brillouin gain spectrum, fₒᵤₜ(t) mainly composed of a frequency component that is twice the predetermined frequency f₁ is obtained. Further, when the center frequency f₀ of the measurement signal MS is shifted from the peak frequency of the Brillouin gain spectrum, the frequency component twice the predetermined frequency f₁ becomes lower. Therefore, the dither spectrum SP3 has a single-peaked (unimodal) shape, similar to that of the Brillouin gain spectrum SP0. Therefore, when the peak frequency of the dither spectrum SP3 can be determined, it is possible to determine a frequency corresponding to the peak frequency of the Brillouin gain spectrum SP0.

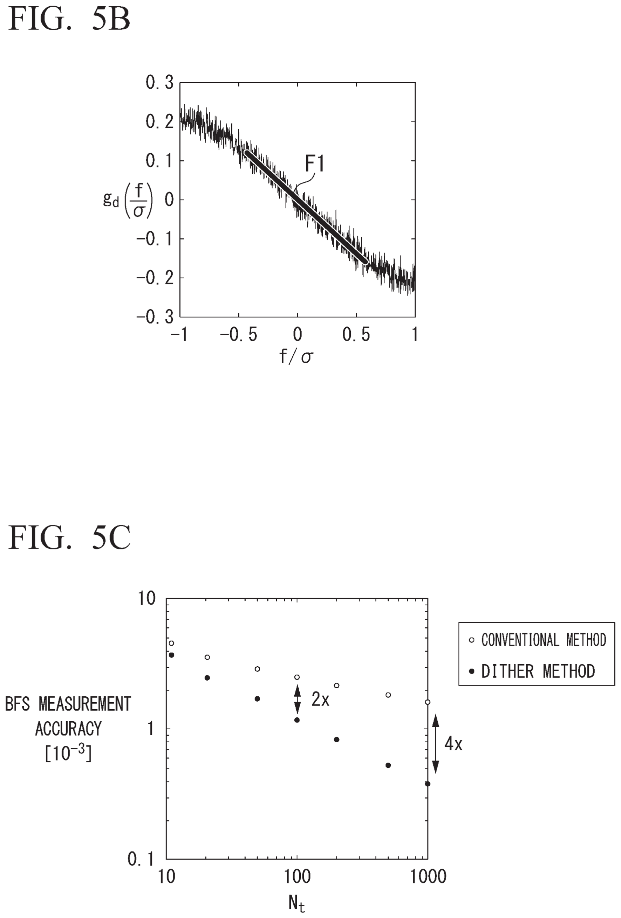

FIG. 5 is a diagram showing a simulation result of the optical fiber characteristic measurement device according to the first embodiment of the present disclosure. In the present simulation, a function g(f/σ) = 1/(1+(f/σ)^2)+N obtained by adding white noise to a Lorentz function is assumed as the Brillouin gain spectrum. FIG. 5A is a diagram showing the Brillouin gain spectrum represented by the above-described function, and FIG. 5B is a diagram showing a dither spectrum obtained when the one-phase lock-in calculation described with reference to FIG. 4A is performed in a case in which the Brillouin gain spectrum is represented by the above-described function.

In the present simulation, for comparison, a simulation of determining the Brillouin frequency shift by a conventional method and a simulation of determining the Brillouin frequency shift by the method according to the present embodiment (dither method) were performed. In the simulation based on the conventional method, the Brillouin frequency shift is determined by fitting an averaged Brillouin gain spectrum with a quadratic function F2 (see FIG. 5A), where Nₜ denotes the number of times the Brillouin gain spectrum, represented by the above-described expression, is averaged. In the simulation based on the method of the present embodiment (dither method), the Brillouin frequency shift is determined by fitting a linear function F1 (see FIG. 5B), where Nₜ denotes the number of data points used to determine a single point.

FIG. 5C is a diagram showing simulation results of the conventional method and the method according to the present embodiment (dither method). In the graph shown in FIG. 5C, the horizontal axis represents Nₜ (the number of times the Brillouin gain spectrum is averaged and the number of data points used to determine a single point), and the vertical axis represents a measurement accuracy of the Brillouin frequency shift. Further, the vertical axis shown in FIG. 5C indicates that a smaller value corresponds to a higher measurement accuracy for the Brillouin frequency shift.

As shown in FIG. 5C, it can be seen that the method according to the present embodiment (dither method) generally has higher accuracy in measuring the Brillouin frequency shift than the conventional method. For example, when Nₜ is 100, the method according to the present embodiment (dither method) provides approximately twice the measurement accuracy for the Brillouin frequency shift compared to the conventional method. Also, when Nₜ is 1000, the method according to the present embodiment (dither method) provides approximately four times the measurement accuracy for the Brillouin frequency shift compared to the conventional method. As described above, in the present embodiment, it can be seen that the measurement accuracy of the Brillouin frequency shift is improved as Nₜ increases, compared to the conventional method.

As described above, in the present embodiment, first, the frequency-modulated continuous light L1 is branched into the pump light LP and the reference light LR, and the pump light LP is converted into the pump pulse light P, which is then injected from one end of the optical fiber under test FUT, thereby obtaining the Brillouin scattered light LS generated within the optical fiber under test. Next, the measurement signal MS modulated at the predetermined frequency f₁ and swept over a predetermined frequency range is superimposed on the detection signal S1 obtained by detecting interference light between the Brillouin scattered light LS and the reference light LR. Then, the dither spectrum, which is a spectrum indicating an intensity or amplitude distribution of a frequency component that is n times (n is an integer of 1 or more) the predetermined frequency contained in the detection signal S1 on which the measurement signal MS is superimposed, is obtained. When the Brillouin frequency shift is determined from the dither spectrum, the measurement accuracy of the Brillouin frequency shift can be improved compared to that of the conventional method.

### [Second embodiment]

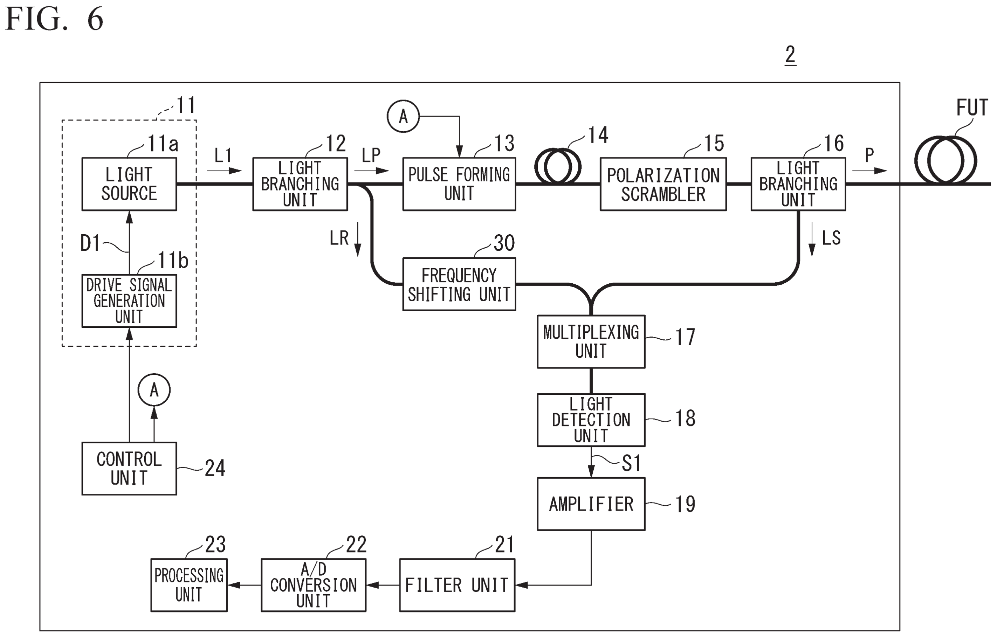

FIG. 6 is a block diagram showing a configuration of a main part of an optical fiber characteristic measurement device according to a second embodiment of the present disclosure. In FIG. 6, components the same as those shown in FIG. 1 are denoted by the same reference signs. As shown in FIG. 6, an optical fiber characteristic measurement device 2 of the present embodiment is configured such that the measurement signal superimposing unit 20 of the optical fiber characteristic measurement device 1 shown in FIG. 1 is omitted, and a frequency shifting unit 30 (shifting unit, superimposing unit) is provided between the light branching unit 12 and the multiplexing unit 17.

The frequency shifting unit 30 shifts a frequency of reference light LR (light used to detect Brillouin scattered light) and superimposes a signal corresponding to a measurement signal MS on the reference light LR. Specifically, the frequency shifting unit 30 includes, for example, a single side band (SSB) modulation element, and shifts the frequency of the reference light LR by an amount corresponding to an amount of Brillouin frequency shift (for example, about 11 GHz). Also, the frequency shifting unit 30 has a configuration corresponding to the measurement signal superimposing unit 20 shown in FIG. 1, and superimposes a signal corresponding to the measurement signal MS on the reference light LR (frequency-shifted reference light LR).

The reason the frequency shifting unit 30 shifts the frequency of the reference light LR is to allow optical homodyne detection to be performed in a light detection unit 18. Also, the reason the frequency shifting unit 30 superimposes a signal corresponding to the measurement signal MS on the reference light LR is to obtain a spectrum similar to the dither spectrum described in the first embodiment.

That is, the optical fiber characteristic measurement device 1 shown in FIG. 1 performed optical heterodyne detection in the light detection unit 18, and superimposed the measurement signal MS on the detection signal S1 obtained by the optical heterodyne detection. In contrast, the optical fiber characteristic measurement device 2 of the present embodiment shifts the frequency of the reference light LR in the frequency shifting unit 30 and superimposes the measurement signal MS, thereby performing optical homodyne detection in the light detection unit 18 and obtaining a detection signal S1 on which the measurement signal MS is superimposed.

The optical fiber characteristic measurement device 2 of the present embodiment differs from the optical fiber characteristic measurement device 1 of the first embodiment only in that the measurement signal superimposing unit 20 is omitted, and the frequency shifting unit 30 shifts the frequency of the reference light LR and superimposes a signal corresponding to the measurement signal MS on the reference light LR. Therefore, a flowchart showing an operation example of the optical fiber characteristic measurement device 2 is, for example, one in which a step of "processing for shifting the frequency of the reference light and superimposing a signal corresponding to the measurement signal on the reference light" is added between steps S12 and S13 of the flowchart shown in FIG. 3, and step S15 is omitted. Therefore, a detailed description of the operation of the optical fiber characteristic measurement device 2 of the present embodiment will be omitted.

As described above, in the present embodiment, first, the frequency-modulated continuous light L1 is branched into the pump light LP and the reference light LR, and the pump light LP is converted into the pump pulse light P, which is then injected from one end of the optical fiber under test FUT, thereby obtaining the Brillouin scattered light LS generated within the optical fiber under test. Also, the frequency of the reference light LR is shifted, and a signal corresponding to the measurement signal MS is superimposed on the reference light LR. Next, a dither spectrum, which is a spectrum indicating an intensity or amplitude distribution of a frequency component that is n times (n is an integer of 1 or more) the predetermined frequency contained in the detection signal S1 obtained by detecting interference light between the Brillouin scattered light LS and the reference light LR, is obtained. When the Brillouin frequency shift is determined from the dither spectrum, the measurement accuracy of the Brillouin frequency shift can be improved compared to that of the conventional method.

Further, in the present embodiment, a case in which the frequency shifting unit 30 shifts the frequency of the reference light LR (light used to detect the Brillouin scattered light) and superimposes a signal corresponding to the measurement signal MS on the reference light LR has been described as an example. However, a configuration for shifting the frequency of the reference light LR (light used to detect the Brillouin scattered light) and a configuration for superimposing a signal corresponding to the measurement signal MS on the reference light LR may be provided separately.

### [Third embodiment]

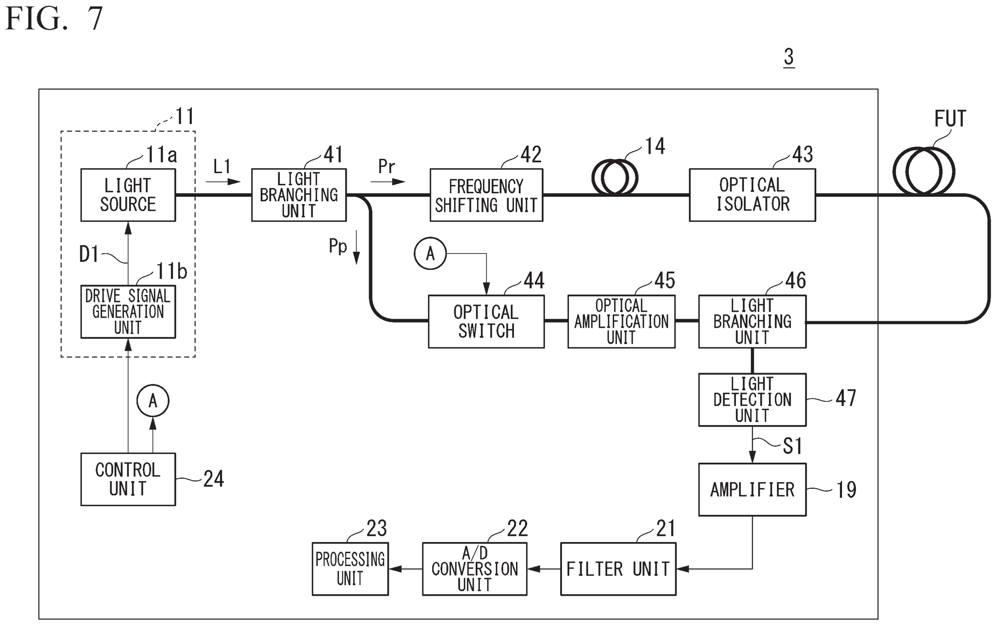

FIG. 7 is a block diagram showing a configuration of a main part of an optical fiber characteristic measurement device according to a third embodiment of the present disclosure. In FIG. 7, components the same as those shown in FIGS. 1 and 6 are denoted by the same reference signs. As shown in FIG. 7, an optical fiber characteristic measurement device 3 of the present embodiment is configured to omit the light branching unit 12, the pulse forming unit 13, the polarization scrambler 15, the light branching unit 16, the multiplexing unit 17, the light detection unit 18, and the measurement signal superimposing unit 20 of the optical fiber characteristic measurement device 1 shown in FIG. 1, and include a light branching unit 41 (third light branching unit), a frequency shifting unit 42 (shifting unit, superimposing unit), an optical isolator 43, an optical switch 44 (pulse forming unit), an optical amplification unit 45, a light branching unit 46 (fourth light branching unit), and a light detection unit 47.

The optical fiber characteristic measurement device 1 shown in FIG. 1 and the optical fiber characteristic measurement device 2 shown in FIG. 6 are optical fiber characteristic measurement devices based on a so-called BOCDR method, in which the pump pulse light P is injected from one end of the optical fiber under test FUT, and a characteristic of the optical fiber under test FUT is measured on the basis of Brillouin scattered light LS obtained from the one end. In contrast, the optical fiber characteristic measurement device 3 of the present embodiment is an optical fiber characteristic measurement device base on a so-called BOCDA method, in which pump light Pp is injected from one end of the optical fiber under test FUT, probe light Pr is injected from the other end of the optical fiber under test FUT, and a characteristic of the optical fiber under test FUT is measured on the basis of the Brillouin scattered light obtained from the one end.

The light branching unit 41 branches continuous light L1 output from a light source unit 11 into the probe light Pr (second branched light) and the pump light Pp (first branched light) at a predefined intensity ratio (for example, 1:1).

The frequency shifting unit 42 is provided between the light branching unit 41 and the light delay unit 14, shifts a frequency of the probe light Pr (light that enters the optical fiber under test) branched by the light branching unit 41, and superimposes a signal corresponding to a measurement signal MS on the probe light Pr. The frequency shifting unit 42 has a configuration similar to that of, for example, the frequency shifting unit 30 shown in FIG. 6. That is, the frequency shifting unit 42 has an SSB modulation element and a configuration corresponding to the measurement signal superimposing unit 20 shown in FIG. 1, shifts a frequency of the probe light Pr by an amount corresponding to an amount of the Brillouin frequency shift, and superimposes a signal corresponding to the measurement signal MS on the probe light Pr (frequency-shifted probe light Pr).

The reason the frequency shifting unit 42 shifts the frequency of the probe light Pr is to amplify the probe light Pr by a stimulated Brillouin scattering phenomenon at a position in which modulation phases of the probe light Pr and the pump light Pp coincide (a position at which a correlation peak appears). Also, the reason the frequency shifting unit 42 superimposes a signal corresponding to the measurement signal MS on the probe light Pr is to obtain a spectrum similar to the dither spectrum described in the first embodiment.

The optical isolator 43 is provided between the light delay unit 14 and the other end of the optical fiber under test FUT, and inputs the probe light Pr that has passed through the light delay unit 14 into the other end of the optical fiber under test FUT. However, the optical isolator 43 blocks light output from the other end of the optical fiber under test FUT and directed toward the light delay unit 14 .

The optical switch 44, under the control of a control unit 24, switches whether or not to output the pump light Pp branched by the light branching unit 41. The optical amplification unit 45 amplifies the pump light Pp output from the optical switch 44 at a predetermined amplification factor. As the optical amplification unit 45, for example, an amplifier such as an erbium doped fiber amplifier (EDFA) can be used.

The light branching unit 46 has a first port, a second port, and a third port, similarly to the light branching unit 16 shown in FIGS. 1 and 6. The first port is connected to the optical amplification unit 45. The second port is connected to one end of the optical fiber under test FUT. The third port is connected to the light detection unit 47. The light branching unit 46 outputs the pump light Pp input from the first port to the second port. Also, light from the optical fiber under test FUT, which is input from the second port, is output to the third port. As such a light branching unit 46, for example, an optical circulator can be used.

The light detection unit 47 includes a highly sensitive light receiving element such as, for example, an avalanche photodiode, and detects the light output from the third port of the light branching unit 46. Here, from one end of the optical fiber under test FUT, the probe light Pr injected from the other end of the optical fiber under test FUT and passed through the optical fiber under test FUT and the Brillouin scattered light generated within the optical fiber under test FUT are output. Therefore, the light detection unit 47 detects the probe light Pr and the Brillouin scattered light output from one end of the optical fiber under test FUT.

The optical fiber characteristic measurement device 3 of the present embodiment has a measurement principle different from the optical fiber characteristic measurement device 1 of the first embodiment and the optical fiber characteristic measurement device 2 of the second embodiment, but a detection signal S1 output from the light detection unit 47 is generally similar to the detection signal S1 obtained in the second embodiment. Therefore, also in the present embodiment, a dither spectrum similar to those in the first and second embodiments can be obtained.

In the present embodiment, first, the frequency-modulated continuous light L1 is branched into the pump light Pp and the probe light Pr, the frequency of the probe light Pr is shifted, and a signal corresponding to the measurement signal MS is superimposed on the probe light Pr. Then, the pump light Pp is injected from one end of the optical fiber under test FUT, and the probe light Pr is injected from the other end of the optical fiber under test FUT. In the optical fiber under test FUT, the probe light Pr is amplified by the stimulated Brillouin scattering phenomenon at a position in which modulation phases of the probe light Pr and the pump light Pp coincide (a position at which a correlation peak appears). Next, a dither spectrum, which is a spectrum indicating an intensity or amplitude distribution of a frequency component that is n times (n is an integer of 1 or more) the predetermined frequency contained in the detection signal S1 obtained by detecting the Brillouin scattered light or the like output from one end of the optical fiber under test FUT, is obtained. When the Brillouin frequency shift is determined from the dither spectrum, the measurement accuracy of the Brillouin frequency shift can be improved compared to that of the conventional method.

Further, in the present embodiment, the frequency of the probe light Pr branched by the light branching unit 41 was shifted, and a signal corresponding to the measurement signal MS was superimposed on the probe light Pr. However, it is also possible to shift the frequency of the pump light Pp branched by the light branching unit 41 and superimpose a signal corresponding to the measurement signal MS on the probe light Pr. Alternatively, a frequency of either the probe light Pr or the pump light Pp branched by the light branching unit 41 may be shifted, and a signal corresponding to the measurement signal MS may be superimposed on the other of the probe light Pr or the pump light Pp branched by the light branching unit 41.

As described above, the optical fiber characteristic measurement device and the optical fiber characteristic measurement method according to the embodiments of the present disclosure have been described, but the present disclosure is not limited to the above-described embodiments and can be freely modified within the scope of the present disclosure. For example, in the above-described embodiments, the optical fiber characteristic measurement devices based on the BOCDR method and the BOCDA method have been described, but the present disclosure is also applicable to devices other than the optical fiber characteristic measurement devices based on the BOCDR and BOCDA methods.

Specifically, the present disclosure can be applied to a device that performs processing of obtaining an amount of Brillouin frequency shift by acquiring a Brillouin gain spectrum and analyzing the acquired Brillouin gain spectrum. Examples of such devices include an optical fiber characteristic measurement device using a Brillouin optical time domain reflectometry (BOTDR) method and an optical fiber characteristic measurement device using a Brillouin optical time domain analysis (BOTDA) method.

## Claims

1. An optical fiber characteristic measurement device comprising:
a light detection unit configured to detect Brillouin scattered light obtained by injecting light into an optical fiber under test and configured to output a detection signal;
a superimposing unit configured to superimpose a measurement signal modulated at a predetermined frequency and swept over a predetermined frequency range on light that enters the optical fiber under test, light used to detect the Brillouin scattered light, or the detection signal; and
a processing unit configured to obtain a spectrum indicating an intensity or amplitude distribution of a frequency component that is n times (n is an integer of 1 or more) the predetermined frequency contained in the detection signal.

2. The optical fiber characteristic measurement device according to claim 1,
wherein the processing unit is configured to measure a characteristic of the optical fiber under test on the basis of the spectrum.

3. The optical fiber characteristic measurement device according to claim 2,
wherein the processing unit is configured to measure a characteristic of the optical fiber under test by obtaining a spectrum indicating an intensity or amplitude distribution of a frequency component that is the same as the predetermined frequency contained in the detection signal and determining either a frequency at which the spectrum reaches a minimum or a frequency at which a sign of the spectrum changes.

4. The optical fiber characteristic measurement device according to claim 2,
wherein the processing unit is configured to measure a characteristic of the optical fiber under test by obtaining a spectrum indicating an intensity distribution of a frequency component that is twice the predetermined frequency contained in the detection signal and determining a peak frequency of the spectrum.

5. The optical fiber characteristic measurement device according to claim 1, further comprising:
a filter unit configured to extract a frequency component that is n times the predetermined frequency from the detection signal.

6. The optical fiber characteristic measurement device according to claim 1, further comprising:
a first light branching unit configured to branch frequency-modulated modulated light into pump light and reference light; and
a second light branching unit configured to inject the pump light from one end of the optical fiber under test and configured to output the Brillouin scattered light generated within the optical fiber under test,
wherein the light detection unit is configured to detect interference light between the Brillouin scattered light and the reference light.

7. The optical fiber characteristic measurement device according to claim 6,
wherein the superimposing unit is configured to superimpose the measurement signal on the detection signal.

8. The optical fiber characteristic measurement device according to claim 6, further comprising:
a shifting unit configured to shift a frequency of the reference light,
wherein the superimposing unit is configured to superimpose the measurement signal on the frequency-shifted reference light.

9. The optical fiber characteristic measurement device according to claim 1, further comprising:
a third light branching unit configured to branch a frequency-modulated modulated light into a first branched light and a second branched light;
a shifting unit configured to shift a frequency of the first branched light or the second branched light;
a pulse forming unit configured to switch whether or not to output the first branched light as pump light; and
a fourth light branching unit configured to inject the pump light output from the pulse forming unit from one end of the optical fiber under test, and configured to output probe light, which is the second branched light injected from the other end of the optical fiber under test and passed through the optical fiber under test, and the Brillouin scattered light generated within the optical fiber under test,
wherein the light detection unit is configured to detect the Brillouin scattered light output from the fourth light branching unit.

10. The optical fiber characteristic measurement device according to claim 9,
wherein the superimposing unit is configured to superimpose the measurement signal on the first branched light or the second branched light.

11. The optical fiber characteristic measurement device according to claim 1,
wherein the predetermined frequency range is a frequency range corresponding to a spectral width of a Brillouin gain spectrum which is a spectrum of the Brillouin scattered light.

12. An optical fiber characteristic measurement method comprising:
a step of obtaining a detection signal by detecting Brillouin scattered light obtained by injecting light into an optical fiber under test;
a step of superimposing a measurement signal modulated at a predetermined frequency and swept over a predetermined frequency range on light that enters the optical fiber under test, light used to detect the Brillouin scattered light, or the detection signal; and
a step of obtaining a spectrum indicating an intensity or amplitude distribution of a frequency component that is n times (n is an integer of 1 or more) the predetermined frequency contained in the detection signal.
